# DEMANDE DE BREVET EUROPEEN

(11) **EP 2 391 034 A1**
(43) Date de publication de la demande: **30.11.2011**
(21) Numéro de dépôt: 10305549.7
(22) Date de dépôt: 25.05.2010
(51) Int. Cl.: H04B 10/10, G07F 7/10

(54) **Dispositif passif lumino-communiquant**

(71) Demandeur: Gemalto SA, 92190 Meudon (FR)
(72) Inventeur: Delage, Frédéric, 13013, MARSEILLE (FR); Arnaud, Christophe, 13850, GREASQUE (FR)

(57) **Abrégé**

Dispositif électronique possédant, sur au moins une de ses faces, un ensemble de capteurs photosensibles formant un panneau de capteurs. Ces capteurs photosensibles sont aptes à fournir indifféremment de l'énergie électrique ou de l'information.

## Description

L'invention concerne un dispositif lumino-communiquant, ainsi que le procédé de communication associé.

L'invention porte en particulier sur un dispositif utilisant une source lumineuse pour recevoir de l'énergie et des informations.

Il est connu de l'art antérieur, des dispositifs électroniques équipés de capteurs photovoltaïques, et fonctionnant donc grâce à l'énergie lumineuse. Parmi les dispositifs couramment rencontrés, on peut citer par exemple les montres, les calculatrices.

En parallèle de cela, des dispositifs électroniques communiquant grâce à une transmission d'information lumineuse ont été largement développés. Parmi les exemples d'implémentations, nous pouvons citer les transmissions infrarouges, notamment des télécommandes, ou bien les stylos optiques.

Ces échanges sont généralement unidirectionnels, et basés sur un ou plusieurs photorécepteurs, qui analysent les variations d'énergie lumineuse qu'ils reçoivent. Cette technologie équipe des équipements dont la capacité de calcul est généralement limitée. La communication se limitant le plus souvent à une émission d'information.

Les dispositifs électroniques communicants intelligents, ont, pour leur part, des interfaces de communication bidirectionnelles complexes, telles que les communications radiofréquence, le protocole USB, le protocole de communication des cartes à puces, etc ...

La miniaturisation des dispositifs électroniques a permis la naissance de dispositifs électroniques communicants avec une forte capacité de calcul, mais avec des ressources physiques limitées. Parmi ces dispositifs nous pouvons citer les cartes à puce, dotées de très fortes capacités de calcul, mais dépourvues, pour la plupart, de ressources énergétiques propres, ainsi que d e périphériques d'entrée et de sortie. Les clefs USB intelligentes (aussi appelées dongle USB) ont les mêmes contraintes.

Ces dispositifs fonctionnent en association avec des dispositifs électroniques dit « hôtes », généralement des ordinateurs. La contrainte majeure, est que ces ordinateurs doivent être équipés de moyens de connexion aptes à accueillir ces dispositifs afin de leurs fournir de l'énergie, et un accès aux périphériques d'entrée et de sortie dont ils ont besoin. Si la majorité des ordinateurs actuels est équipée de ports USB, la présence de lecteurs de carte à puce est plus rare.

La présente invention tend à résoudre ce problème en proposant un dispositif électronique équipée de capteurs photosensibles pouvant aussi bien servir à fournir de l'énergie, qu'à recevoir de l'information.

Cela permet de faire fonctionner un tel dispositif avec n'importe quel appareil électronique, à partir du moment où celui-ci est muni d'un écran, et possède des moyens pour moduler l'affichage dudit écran.

Ainsi, nous citerons par exemple les téléphones portables, les téléviseurs, les consoles de jeux, ou bien les ordinateurs.

Dans la suite de la présente description, nous prendrons, l'exemple d'un ordinateur et de son moniteur, à titre indicatif et nullement limitatif.

Ainsi, en présence d'un moniteur, et du programme informatique adapté, un tel dispositif communiquant peut être associé à n'importe quel ordinateur, et recevoir de celui-ci des informations et de l'énergie.

Plus particulièrement, la présente invention décrit dans un premier temps un dispositif électronique possédant, sur au moins une de ses faces, un ensemble de capteurs photosensibles formant un panneau de capteurs. Ces capteurs photosensibles sont aptes à fournir indifféremment de l'énergie électrique ou de l'information.

De plus, deux unités de calcul peuvent être connectées audit panneau, la première, dite unité de pilotage, et la deuxième dite unité de traitement, chacune alimentée par tout ou partie de l'énergie fournie par le panneau de capteurs.

Selon un mode de réalisation, l'unité de pilotage peut être apte à diriger le signal issu de tout ou partie des capteurs photosensibles, vers le circuit d'alimentation en énergie de ladite unité de traitement, ou bien vers ladite unité de traitement.

Le dispositif électronique selon l'invention, peut posséder un moyen d'affichage, alimenté par les capteurs photosensibles, et relié à l'unité de traitement. L'unité de traitement peut être apte à afficher une information sur ce moyen d'affichage.

L'invention décrit, dans un deuxième temps, un procédé de communication et d'alimentation entre deux dispositifs électronique, dont le premier, dit émetteur possède des moyens aptes à illuminer une surface dite aire de communication, divisible en au moins deux zones, le second, dit dispositif électronique récepteur possède sur une de ses faces un ensemble de capteurs photosensibles formant un panneau de capteurs, ce panneau est positionné à proximité immédiate de l'aire de communication, de manière à être illuminé par celle-ci.

Le dispositif émetteur peut posséder une unité de calcul dite unité de communication, apte à faire varier sélectivement l'intensité de l'illumination de chacune des zones.

Afin d'établir une communication, le procédé comporte au moins les étapes suivantes :
➢ l'unité de communication illumine tout ou partie des zones durant une durée D1,
➢ le panneau dirige tout ou partie de l'énergie électrique fournie par les capteurs vers le circuit d'alimentation électrique,
➢ l'unité de communication module l'illumination d'au moins une zone prédéfinie, afin de transmettre des informations sur les données à transmettre
➢ l'unité de pilotage reçoit ces informations
➢ en fonction des informations reçues, l'unité de pilotage sélectionne un sous ensemble de capteurs photosensibles, dont le signal de sortie est orienté vers l'unité de traitement.

Dans un troisième temps, l'invention concerne également un programme d'ordinateur permettant d'afficher un cadre précis, dit aire de communication, divisible en au moins deux zones, sur un écran, et illuminer ces zones, afin d'alimenter en énergie un dispositif externe muni de cellules photo sensibles. Ce programme d'ordinateur est apte à faire varier l'intensité lumineuse de tout ou partie des zones, afin de transmettre au dispositif externe de l'information.

D'autres caractéristiques et avantages de l'invention ressortiront clairement de la description qui en est faite ci-après, à titre indicatif et nullement limitatif, en référence aux dessins annexés dans lesquels :
- La figure 1 représente une carte à puce selon l'invention
- La figure 2 représente les flux d'énergie et d'informations entre les différents modules qui composent un dispositif selon l'invention
- La figure 3 illustre une mise en oeuvre de l'invention avec un ordinateur.

Dans la suite de la description, un dispositif selon l'invention sera illustré par une carte à puce. Ce choix est uniquement indicatif et nullement limitatif, l'invention s'adaptant à tout dispositif électronique portable, et notamment les dispositifs électroniques dépourvus d'alimentation électrique propre, tels que les cartes à puces, les dongles USB, etc...

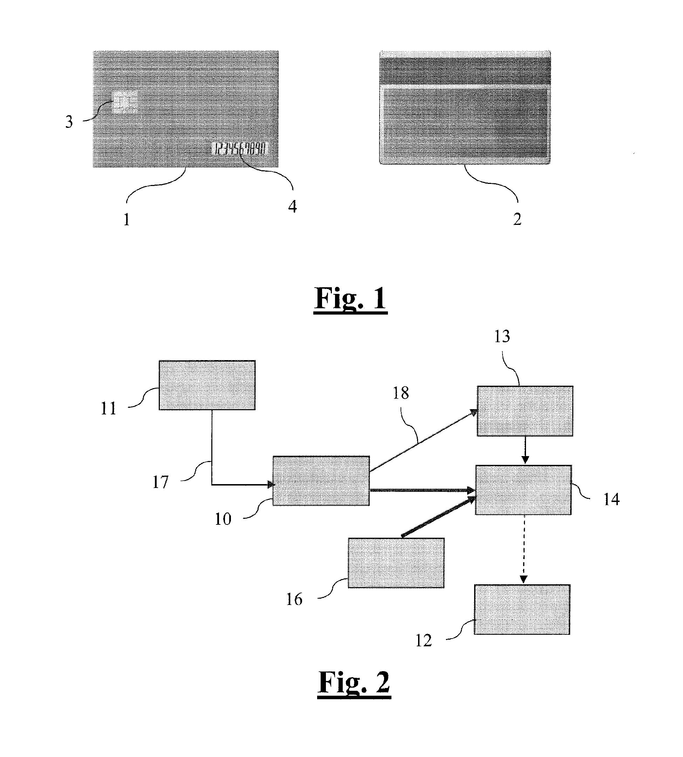

Dans la figure 1, nous pouvons voir une carte à puce selon l'invention. Celle-ci comporte sur sa face avant 1 un module de connexion standard 3, non nécessaire à la mise en oeuvre de l'invention. Cette carte peut également comporter dans son corps de carte des moyens de communication sans contact, sans influence sur l'invention. Cette carte comporte un écran 4, permettant de restituer des informations vers l'extérieur de la carte. Cet écran vient illustrer un mode préféré d'implémentation de l'invention. En effet, l'invention permet de fournir à la carte, tant de l'information, que de l'énergie pour effectuer des traitements. Si, dans certains cas, le traitement va pouvoir se dérouler « en aveugle », il reste intéressant, le plus souvent, de pouvoir restituer une information à l'utilisateur. L'écran a cette fonction.

Cet écran est donc un moyen parmi d'autres de réaliser cette restitution. N'importe quel moyen apte à diffuser une information peut lui être substitué, notamment un émetteur audio phonique.

Sur la face postérieure 2 de la carte, nous pouvons voir un ensemble de capteurs photosensibles. Ces capteurs photosensibles peuvent servir indifféremment à la production d'énergie, ou à la réception d'information par la carte.

L'organisation d'un dispositif selon l'invention est décrite dans la figure 2.

Les boites représentées dans cette figure sont des boites fonctionnelles. C e s fonctionnalités peuvent être réalisées par des éléments physiques communs ou distincts.

Les capteurs photosensibles 11, reçoivent de l'énergie lumineuse. Cette énergie est convertie en énergie électrique que nous appellerons ici signal 17. Ce signal est dirigé vers une unité de pilotage 10. Cette unité de pilotage a pour fonction d'orienter tout ou partie du signal, vers le circuit d' alimentation 13, ou vers l'unité de traitement 14.

L'unité de pilotage 10 est apte à sélectionner le signal issu de chaque cellule, ou groupe de cellules photosensibles 11. Chacun de ces sous-signaux est redirigé par l'unité de pilotage vers le circuit d'alimentation, ou bien l'unité de traitement.

Dans un mode préféré d'implémentation de l'invention, l'unité de pilotage fonctionne avec un ensemble de règles décisionnelles, définissant quels sous-signaux doivent être redirigés vers le circuit d'alimentation, et quels doivent être dirigés vers l'unité de traitement.

Il devient ainsi possible, en illuminant les capteurs 11 de manière sélectives, d'alimenter l'unité de traitement, et de lui transmettre de l'information. Les règles décisionnelles peuvent être construites de manière à ce que, en fonction de critères prédéfinis, la destination des sous-signaux changent. Ainsi lors du démarrage de la carte, l'ensemble des sous-signaux peut être dirigé vers le circuit d'alimentation afin de produire un maximum d'énergie. Dans une phase ultérieure, la carte peut recevoir des informations de l'extérieur, et auquel cas les sous-signaux issus d'une zone prédéfinie des capteurs 11 vont être dirigés vers l'unité de traitement. Une fois ces données reçues, et afin de permettre leur traitement, un maximum de sous-signaux peut être de nouveaux orientés vers le circuit d'alimentation.

Les règles décisionnelles peuvent avantageusement être mises à jour, par exemple au travers des informations reçues via les capteurs 11.

Dans le cas ou la carte est munie d'un écran 12, les informations à afficher vont être envoyées par l'unité de traitement 14, mais l'énergie électrique nécessaire à l'affichage va être fournie par l'unité d'alimentation 13.

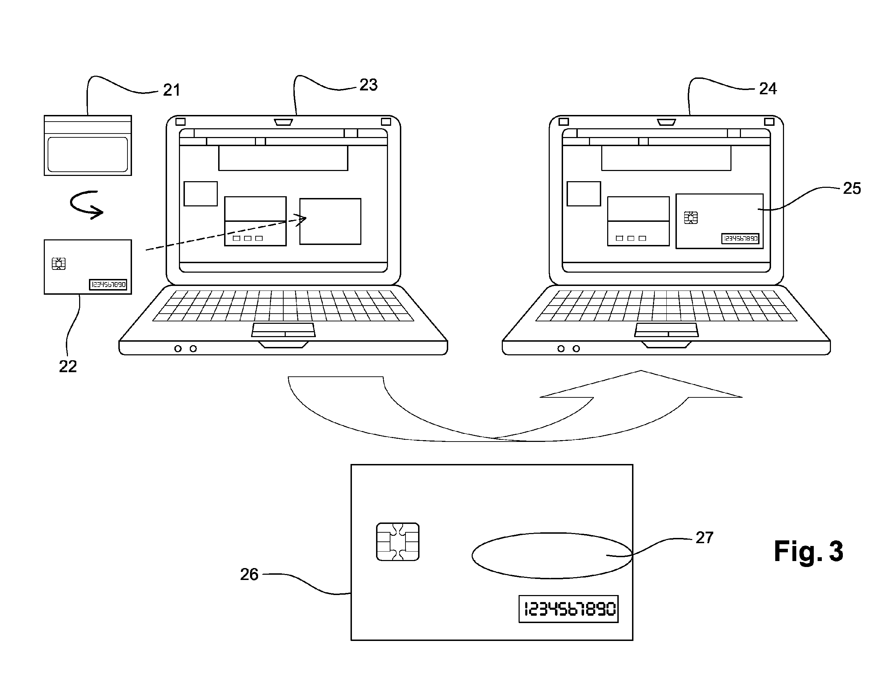

La figure 3 illustre le fonctionnement de la carte décrite ci-avant.

En effet, pour illuminer les capteurs 11, et notamment fournir tant de l'énergie que de l'information, il faut un système d'illumination adapté.

L'invention prévoit l'usage d'un écran 23, ainsi que d'un programme informatique adapté. Ces deux éléments seront ici représentés par un ordinateur à titre d'exemple.

Ainsi, le programme d'ordinateur peut définir une zone très précise de l'écran sur laquelle la carte doit être présentée. Cette zone peut ainsi être illuminée sélectivement afin de fournir à la carte l'énergie nécessaire à son fonctionnement ainsi que les informations dont elle a besoin.

Une implémentation particulièrement intéressante de l'invention comporte une carte bancaire selon l'invention, ainsi que le site web de la banque correspondante affiché à l'écran de l'ordinateur. Avant de pouvoir faire un paiement en ligne, l'utilisateur s'identifie sur le site web, et pose sa carte contre l'écran, dans le cadre affiché à cet effet. Le serveur de la banque envoie à la carte un aléa, la carte traite celui-ci, et produit un numéro unique de transaction, qui est affiché sur l'écran. Les ressources de la carte ont ainsi pu être utilisées, en adéquation avec des informations issues directement de la banque, sans que l'utilisateur n'ait besoin de posséder de lecteur spécifique.

## Revendications

1. Dispositif électronique possédant, sur au moins une de ses faces, un ensemble de capteurs photosensibles formant un panneau de capteurs, **caractérisé en ce que** lesdits capteurs photosensibles qui composent ledit panneau sont aptes à fournir indifféremment de l'énergie électrique ou de l'information.

2. Dispositif électronique selon la revendication 1 **caractérisé en ce que** deux unités de calcul sont connectées audit panneau, la première, dite unité de pilotage, et la deuxième dite unité de traitement, chacune alimentée par tout ou partie de l'énergie fournie par ledit panneau.

3. Dispositif électronique selon la revendication 1 **caractérisé en ce que** ladite unité de pilotage est apte à diriger le signal issu de tout ou partie desdits capteurs photosensibles, vers le circuit d'alimentation en énergie de ladite unité de traitement, ou bien vers ladite unité de traitement.

4. Dispositif électronique selon l'une quelconque des revendications précédentes, **caractérisé en ce qu'**il possède un moyen d'affichage, alimenté par lesdits capteurs photosensibles, et relié à ladite unité de traitement.

5. Dispositif électronique selon la revendication 4 **caractérisé en ce que** ladite unité de traitement est apte à afficher une information sur ledit moyen d'affichage.

6. Procédé de communication et d'alimentation entre deux dispositifs électroniques, dont le premier, dit émetteur, possède des moyens aptes à illuminer une surface dite aire de communication divisible en au moins deux zones, le second, dit dispositif électronique récepteur, possède sur une de ses faces un ensemble de capteurs photosensibles formant un panneau de capteurs, **caractérisé en ce que** ledit panneau est positionné à proximité immédiate de ladite aire de communication de manière à être illuminé par celle-ci.

7. Procédé de communication et d'alimentation selon la revendication 6, **caractérisé en ce que** ledit dispositif émetteur possède une unité de calcul dite unité de communication, apte à faire varier sélectivement l'intensité de l'illumination de chacune desdites zones.

8. Procédé de communication et d'alimentation selon la revendication 7 **caractérisé en ce que**, afin d'établir une communication, ledit procédé comporte au moins les étapes suivantes :
➢ l'unité de communication illumine tout ou partie desdites zones durant une durée D1,
➢ ledit panneau dirige tout ou partie de l'énergie électrique fournie par lesdits capteurs vers le circuit d'alimentation électrique,
➢ l'unité de communication module l'illumination d'au moins une zone prédéfinie, afin de transmettre des informations sur les données à transmettre
➢ l'unité de pilotage reçoit les dites informations
➢ en fonction des informations reçues, ladite unité de pilotage sélectionne un sous ensemble de capteurs photosensibles, dont le signal de sortie est orienté vers ladite unité de traitement.

9. Programme d'ordinateur permettant d'afficher un cadre précis, dit aire de communication, divisible en au moins deux zones, sur un écran, et illuminer les dites zones, afin d'alimenter en énergie un dispositif externe muni de cellules photo sensibles, **caractérisé en ce que**, ledit programme d'ordinateur est apte à faire varier l'intensité lumineuse de tout ou partie desdites zones, afin de transmettre audit dispositif externe de l'information.
